# EUROPEAN PATENT APPLICATION

(11) **EP 1 517 505 A2**
(43) Date of publication of application: **23.03.2005**
(21) Application number: 04021355.5
(22) Date of filing: 08.09.2004
(51) Int. Cl.: H04L 29/06

(54) **Content providing system and method for passenger vehicles**

(30) Priority: 19.09.2003 JP 2003328141
(71) Applicant: NEC CORPORATION, Tokyo (JP)
(72) Inventor: Dei, Hiroaki, Minato-ku, Tokyo (JP); Ozawa, Kazunori, Minato-ku, Tokyo (JP); Mizuno, Daisuke, Minato-ku, Tokyo (JP)
(74) Representative: Glawe, Delfs, Moll & Partner

(57) **Abstract**

A content server in a passenger vehicle transmits content information that has been requested to a management center when the passenger vehicle is in motion, and when the passenger vehicle has stopped, and then receives the requested content from an edge server at the location at which the passenger vehicle is stopped.

## Description

### Background of the Invention:

### Field of the Invention:

The present invention relates to a service providing method and to a service providing system for providing a service that increases the satisfaction of passengers of vehicles such as trains, buses, aircraft or ships.

### Description of the Related Art:

Various services are now being provided to passengers (such as passengers that are taking an extended journey).

As an example, content providing services, which offer movies or news to passengers on passenger planes through the use of projectors or monitors that are incorporated in seats, are implemented. In addition, news distribution services are implemented on trains by means of character telops (television opaque projectors). Services for selling products to passengers, for example, services for selling articles sold in stores on passenger vehicles or services for circulating sales of articles provided by attendants of passenger vehicles are further implemented.

However, in the distribution of content such as movies that is implemented on a passenger plane, the same content is repeatedly distributed on a fixed travel route and during a fixed period. As a result, there is a possibility that the content that users wish to view will not be available in the passenger plane.

Alternatively, in a service for selling articles to passengers, there is a possibility that articles desired by passengers will be sold out. As a result, the service for selling articles in many cases will not be a service that raises the degree of customer satisfaction of passengers. On the other hand, a service for circulating sales of articles by attendants is a service in which the sales time is limited to the time that the attendants can circulate. In addition, attendants, who are engaged in circulating sales, cannot anticipate passengers' needs beforehand, and attendants may therefore not be able to provide passengers with the articles desired by the passengers at the time that the passengers request them.

The above-described problems arise from the inability of the service provider that provides the service to passengers to adequately anticipate the demands of passengers.

Because of the development of networks such as the Internet and the www (World Wide Web), the phenomenal advance of web browsing technology, and the popularization of notebook type personal computers and PDAs (Personal Digital Assistants) in recent years, individuals use web browsing to receive content at his or her own terminal device. Therefore, content reception is now realized "on-demand." As a result, there is growing demand from users who wish to use the above-described content reception even when in a passenger vehicle is in motion. However, a number of problems arise when the passenger uses the Web to receive content at his or her own terminal device.

For example, in a passenger vehicle, a notebook type personal computer and

PDA must use a wireless communication device such as a portable telephone to connect to the network. As a result, resources for communication will be limited to the bandwidth that can be used by a wireless communication device such as a portable telephone. Further, this used bandwidth is more limited while the passenger vehicle is in motion than when the passenger vehicle is stopped. Further still, a terminal device of an individual cannot connect to a network unless it is within the area in which the portable telephone can be used. As a result, the quality of the content that can be acquired while the passenger vehicle is in motion may drop, the time needed to browse the Web may lengthen, or the ability of terminal device to receive content distribution service may be lost.

Document 1 (Japanese Patent Laid-Open Publication No. 2001-222603) discloses a service providing system that can provide a solution to the above-described problems.

The service providing system that is described in Document 1 includes: a portable terminal device of a train passenger; an onboard server of the service provider installed on a train; an information provision unit of the service provider installed outside the train; and the Internet that connects the onboard server and the information provision unit.

The passenger's portable terminal device reports the service requested by the owner of the portable terminal device (the passenger) to the information provision unit by way of the onboard server. The information provision unit provides the requested service to the portable terminal device of the passenger by way of the onboard server.

When the requests for the purchase of an article and for delivery are transmitted from the portable terminal device, the information provision unit settles the product transaction and arranges for delivery of the product. The service provider is thus able to provide service in accordance with the requests of each individual passenger.

In addition, a passenger's portable terminal device can connect to the Internet by way of the onboard server, and a passenger's portable terminal device can therefore connect to the Internet even when outside the service area of the portable telephone.

Document 2 (Japanese Patent Laid-Open Publication No. 2002-190764) discloses a data delivery system that includes: the portable terminal device of a train passenger; a data server installed on the train; and a data base station installed along the train's path of travel. When the train approaches the data base station, the data base station delivers content to the data server. The data server delivers content requested from the portable terminal device to the portable terminal device.

Nevertheless, when a passenger vehicle such as a train is in motion, communication between a server inside the passenger vehicle and an information provision unit outside the passenger vehicle will be unstable. As a consequence, the possibility, that the server in the passenger vehicle will not be able to accurately receive the service information such as content (for example, a movie or news) provided by the information provision unit, arises in the service providing system that is described in Document 1 and the data delivery system that is described in Document 2.

As a result, there is a strong possibility that when the passenger vehicle is in motion, the server in the passenger vehicle will receive inaccurate information.

### Summary of the Invention:

It is an object of the present invention to provide a service providing method and service providing system for use in a passenger vehicle that can adequately comprehend requests of passengers.

It is another object of the present invention to provide a service providing method and a service providing system for use in a passenger vehicle that can adequately comprehend the requests of passengers and that can reduce potentially impossible communication operations when the passenger vehicle is in motion.

To achieve the above-described objects, according to the service providing method and service providing system of the present invention, content that has been requested by a terminal device in a passenger vehicle is delivered to that terminal device. In addition, the terminal device receives desired content provided by a content management unit in a state that allows exact reception of the desired content. As a result, according to the present invention, it is possible to reduce potentially impossible content communication operations.

In addition, desired content provided by the content management unit is preferably received when the passenger vehicle has stopped.

When the content management unit receives the desired content request signal, it is better if the content management unit transmits the desired content to an edge server installed at a location at which the passenger vehicle is going to stop, and it is better if the edge server transmits the desired content to the passenger vehicle.

If a terminal device that exists in the passenger vehicle is notified that the desired content has been received, the passenger can easily check for the addition of the desired content.

If the content is distributed by a multicast or broadcast mode and terminal devices receive the desired content by this mode, the distribution traffic no longer depends on the number of distribution terminal devices, whereby distribution traffic can be more effectively used.

If terminal devices are provided with desired content that has undergone processing to boost resistance against changes in data (data errors and/or data loss), the terminal devices can more accurately execute the desired content.

In addition, according to the service providing method and service providing system of the present invention, reservation results can be distributed to a terminal device in a passenger vehicle that has requested the reservation. Moreover, the reservation application signal is transmitted to the reservation management unit when a communication bandwidth, which allows transmission of the reservation application signal to the reservation management unit, can be secured, and the reservation results are received when a communication bandwidth, which allows reception of the reservation results that correspond to the reservation application signal from the reservation management unit, can be secured. As a result, reservation application and reservation results can be transmitted reliably, and reservation-related communication operations that are potentially impossible can be reduced.

According to the service providing method and service providing system of the present invention, a user is able to reserve a desired facility in the passenger vehicle. The service provider is therefore able to adequately comprehend the demands of passengers.

In addition, if a reservation management unit that is installed outside the passenger vehicle and that manages reservations of at least one facility is further included, and if the vehicle server receives information from the reservation management unit when a communication bandwidth, which allows reception of a signal of the latest vacant facility information of the passenger vehicle managed at the reservation management unit, can be secured, and then updates the latest vacant facility information managed by the vehicle server with the reservation application signal, communication operations that are potentially impossible when the passenger vehicle is in motion, can be reduced.

If a reservation application signal that contains acquisition method information that indicates the method of acquiring tickets for using a desired facility is received as a reservation application signal, and if, when a reservation that corresponds to the reservation application signal is obtained, the arrangements for implementing the acquisition method are carried out, a passenger, him or herself, can acquire tickets for using the desired facility by the desired method.

The charge for using a desired facility for which a reservation has been submitted by the reservation application signal may be a price that differs from the normal price.

According to the present invention, the desired article request signal is transmitted to the article management unit when the desired article is not available in the passenger vehicle, and the article management unit makes arrangements such that the desired article is provided to the passenger, and as a result, a desired article request signal is transmitted to the article management unit only when the desired article is not available, and the transmission of unnecessary request signals to the article management unit can therefore be suppressed.

According to the present invention, a request signal for a desired article is reported to an attendant of the passenger vehicle. As a result, the attendant is able to confirm the validity of a request signal for a desired article, whereby the transmission of erroneous request signals to an article management unit that is installed outside the passenger vehicle and that manages articles can be prevented, and the transmission of unnecessary request signals to the article management unit can be suppressed.

An application for the use of the provided service may be accepted at the same time as accepting an application for use of the passenger vehicle.

When accepting an application for use of the passenger vehicle, the passenger authentication information that will be required when using the provided service should be provided to the person that applied for use of the passenger vehicle.

Further still, the charges for using the provided service may be accepted simultaneously with the passenger vehicle fare. The method of settling the charges relating to the provision of the service may be arranged when accepting an application for use of the passenger vehicle. The charges for using the provided service may be added. The results of this addition may be reported to a management center installed outside the passenger vehicle. Further still, an agent's fee may be obtained as a result of collecting charges for using the provided service.

The present invention not only enables adequate comprehension of the demands of passengers of a passenger vehicle, but also allows a reduction of communication operations that are potentially futile when the passenger vehicle is in motion.

The present invention also enables the distribution of content or the provision of information to the terminal device of an individual in a passenger vehicle. The present invention allows services and articles sought by passengers to be more accurately provided to the passengers and can therefore improve the degree of satisfaction of passengers of a passenger vehicle.

Finally, the present invention can be expected to expand profits apart from passenger vehicle fares by increasing income derived from charges for use of services and charges for viewing content, by obtaining income for agent's fees for the reservation of facilities, and by increasing the sales of articles. The above and other objects, features, and advantages of the present invention will become apparent from the following description with reference to the accompanying drawings, which illustrate examples of the present invention.

### Brief Description of the Drawings:

FIG. 1 is a block diagram showing the service providing system of a working example of the present invention.
FIG. 2 is an explanatory view of an example of a site map for the service providing system that is shown in FIG. 1.
FIG. 3 is a block diagram for explaining the operations of the service providing system that is shown in FIG. 1.
FIG. 4 is a block diagram for explaining the operations of the service providing system that is shown in FIG. 1.
FIG. 5 is a block diagram for explaining the operations of the service providing system that is shown in FIG. 1.
FIG. 6 is a block diagram for explaining the operations of the service providing system that is shown in FIG. 1.
FIG. 7 is a block diagram for explaining the operations of the service providing system that is shown in FIG. 1.
FIG. 8 is a block diagram for explaining the operations of the service providing system that is shown in FIG. 1.

### Detailed Description of the Preferred Embodiments:

First Working Example

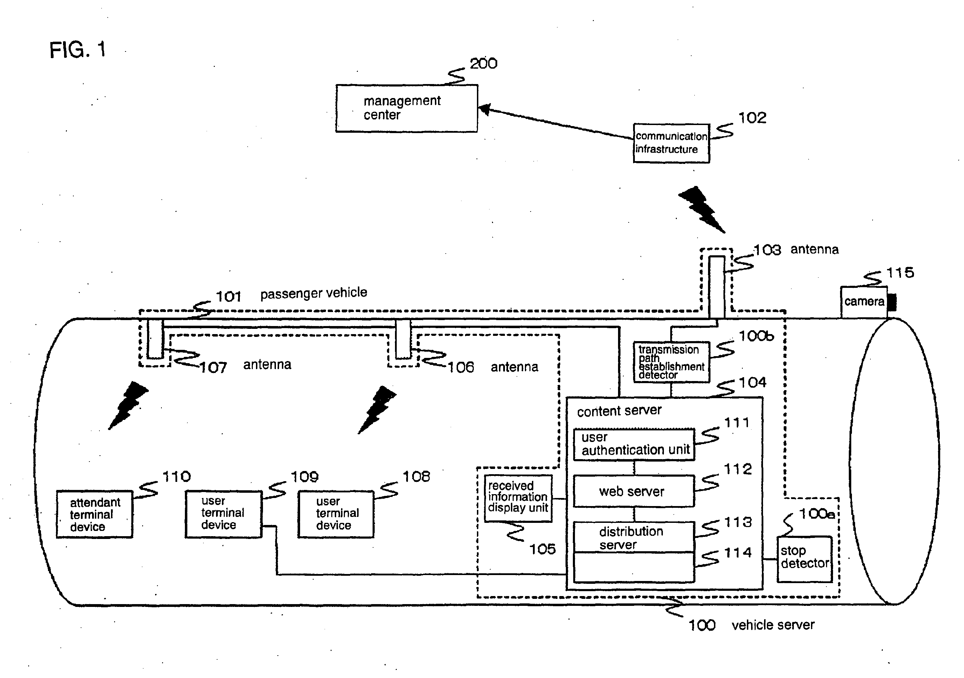

FIG. 1 is a block diagram showing the service providing system of the first working example of the present invention.

In FIG. 1, the service providing system includes: vehicle server 100 installed in passenger vehicle 101 such as a train, bus, aircraft or ship; and management center 200 installed outside the passenger vehicle.

Vehicle server 100 communicates with management center 200 by way of communication infrastructure 102.

Communication infrastructure 102 is, for example, a portable telephone network, a satellite line, or a wireless LAN, and can be altered as appropriate. If passenger vehicle 101 is a train, communication infrastructure 102 may be a LCX (Leakage Coaxial Cable) installed next to the tracks.

In the present working example, vehicle server 100 and communication infrastructure 102 exchange information by radio communication when passenger vehicle 101 is in motion, and exchange information by radio communication and/or cable communication when passenger vehicle 101 is at rest.

Vehicle server 100 includes: stop detector 100a, transmission path establishment detector 100b, antenna 103, content server 104, received information display unit 105, and antennas 106 and 107. Vehicle server 100 is connected to camera 115 installed on passenger vehicle 101. Content server 104 includes: user authentication unit 111, web server 112, distribution server 113, and transmission resistance boosting unit 114.

Stop detector 100a detects states in which passenger vehicle 101 is stopped, and supplies the detection results as output to content server 104. Transmission path establishment detector 100b detects whether a transmission path has been established between vehicle server 100 and communication infrastructure 102 and supplies the detection results as output to content server 104.

Content server 104 determines whether passenger vehicle 101 is stopped or not based on the output from stop detector 100a. Content server 104 further determines whether or not a transmission path has been established between vehicle server 100 and communication infrastructure 102 based on the output from transmission path establishment detector 100b.

Content server 104 controls communication with management center 200 based on the determination results of at least one of the result of determining whether passenger vehicle 101 is stopped or not and the result of determining whether a transmission path has been established with communication infrastructure 102.

Vehicle server 100 may have either or both stop detector 100a and transmission path establishment detector 100b.

User authentication unit 111 authenticates users who access content server 104 based on authentication information entered as input from user terminal device 108 or 109.

Web server 112 displays services provided by this service providing system, and further provides a web site for allowing users to select these services on the user terminal devices in passenger vehicle 101.

Distribution server 113 stores at least one type of content and distributes content, selected by a user terminal device in passenger vehicle 101, to the user terminal device that selected the content.

When distribution server 113 distributes content (distribution data), transmission resistance boosting unit 114 processes the content to boost resistance to changes in data (data error and/or data loss) so that this content will not change in the radio transmission path.

User terminal device 108, user terminal device 109, and attendant terminal device 110 in passenger vehicle 101 connect to vehicle server 100 by way of an IP (Internet Protocol) network made up of a radio LAN (Local Area Network) or a cable LAN and by means of antennas 106 and 107. More specifically, user terminal device 108 and attendant terminal device 110 are connected to vehicle server 100 (concretely, to content server 104) by means of a radio LAN, and user terminal device 109 is connected to vehicle server 100 (concretely, to content server 104) by means of a cable LAN.

User terminal devices 108 and 109 are personal computers or PDAs, or terminal devices equivalent to such devices.

By means of web browsers installed in the user terminal devices, user terminal devices 108 and 109 are able to obtain information on the moving picture content distributed in passenger vehicle 101 (for example, a list of movie content) and information on music content (for example, a list of music content) from web server 112 of content server 104.

When a user, a passenger of passenger vehicle 101, manipulates a user terminal device to select content that has been prepared in distribution server 113 in content server 104, the user terminal device transmits the request signal for the selected content.

Vehicle server 100 receives the request signal for content that has been transmitted from the user terminal device by way of antenna 106 or antenna 107.

If distribution server 113 has the content requested by the content request signal transmitted from the user terminal device, distribution server 113 distributes the content requested by the received request signal to the user terminal device that transmitted the request signal, whereby the user is able to view the selected content on the user terminal device.

If distribution server 113 does not have the content requested by the content request signal transmitted from the user terminal device, content server 104 transmits a signal seeking the content requested by the request signal to management center 200. When content server 104 receives the content from management center 200, distribution server 113 distributes the content supplied from management center 200 to the user terminal device that transmitted the request signal, whereby the user is able to view the selected content on the user terminal device.

Because the potential for data error or data loss on the radio transmission path exists, when content server 104 distributes moving picture or music content using the radio LAN in passenger vehicle 101, transmission resistance boosting unit 114 may therefore process the distributed data (content) such that the distributed data (content) has resistance against data error or data loss on the radio transmission path, or in other words, such that the distributed data (content) has resistance against changes of data on the radio transmission path, and may then distribute the processed content to the user terminal device.

It will be obvious that, in the present embodiment, at least one of user authentication unit 111, web server 112, and distribution server 113 that are included in content server 104 may be realized as an independent device or by a program that is executed on a computer.

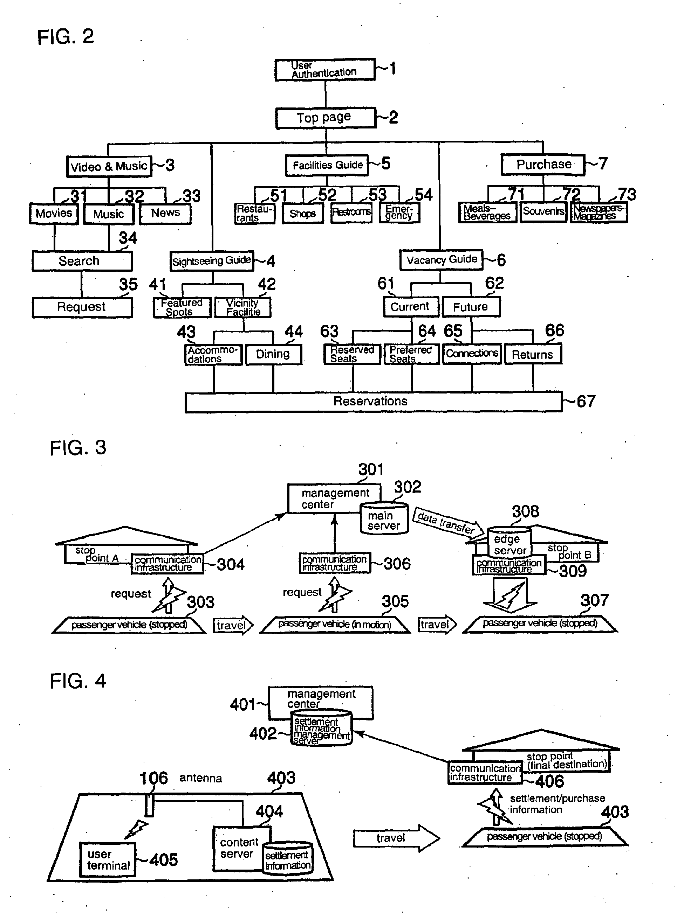

FIG. 2 is an explanatory view for explaining an example of a site map of the web site that is prepared in web server 112 of content server 104.

In FIG. 2, the web site prepared in web server 112 begins with User Authentication page 1 for authenticating the user. When the web site has authenticated the user in User Authentication page 1, it transfers to Top page 2.

Top page 2 is a page that allows the selection of any of the follwing "Video & Music" page 3, "Sightseeing Guide" page 4, "Facilities Guide" page 5; "Vacancy Guide" page 6, and "Purchase" page 7.

"Video & Music" page 3 is a page that allows selection of any of the follwing "Movies" page 31, "Music" page 32, and "News" page 33.

"Movies" page 31 allows selection of either "Search" page 34 or "Request" page 35. "Search" page 34 enables a search for a desired movie, and "Request" page 35 enables a request for the desired movie (content).

"Music" page 32 allows selection of either "Search" page 34 or "Request" page 35. "Search" page 34 enables a search for desired music. "Request" page 35 enables a request for the desired music (content).

"News" page 33 is a page that distributes news as content to user terminal device 108 or 109. "Sightseeing Guide" page 4 is a page that allows selection of either "Featured Spots" page 41 or "Vicinity Facilities" page 42.

"Featured Spots" page 41 is a page for distributing information on featured spots as content to user terminal device 108 or 109.

"Vicinity Facilities" page 42 is a page that allows selection of either "Accommodations" page 43 or "Dining" page 44. "Accommodations" page 43 is a page for distributing information on accommodation facilities as content to user terminal device 108 or 109. "Reservations" page 67 allows acceptance of reservations for a desired accommodation facility. "Dining" page 44 is a page for distributing information on dining facilities as content to user terminal device 108 or 109. "Reservations" page 67 allows the acceptance of reservations for a desired dining facility.

"Facilities Guide" page 5 is a page for guidance to facilities in passenger vehicle 101. In the present embodiment, "Facilities Guide" page 5 allows selection of any of the following "Restaurants" page 51, "Shops" page 52, "Restrooms" page 53, and "Emergency" page 54.

"Restaurants" page 51 is a page for distributing dining information as content to user terminal device 108 or 109. "Shops" page 52 is a page for distributing information on shops as content to user terminal device 108 or 109. "Restrooms" page 53 is a page for distributing information on restrooms as content to user terminal device 108 or 109. "Emergency" page 54 is a page for distributing information on emergencies as content to user terminal device 108 or 109.

"Vacancy guide" page 6 is a page for distributing information on vacancies of passenger vehicle 101 as content to user terminal device 108 or 109. "Vacancy Guide" page 6 is a page that allows selection of either "Current" page for providing information about empty seats that is currently being boarded, or "Future" page 62 for providing information about empty seats on a passenger vehicle that is not currently being boarded.

"Current" page 61 is a page that allows selection of either "Reserved Seats" page 63 or "Preferred Seats" page 64. "Reserved Seats" page 63 is a page for distributing information on reserved seats as content to user terminal device 108 or 109. "Reservations" page 67 is able to accept reservations for desired reserved seats. "Preferred Seats" page 64 is a page for distributing information on preferred seats (for example, first-class seats, "Green Seats," or first-class cabins) as content to user terminal device 108 or 109. "Reservations" page 67 is able to accept reservations for desired preferred seating.

"Future" page 62 is a page that allows selection of either "Connections" page 65 or "Returns" page 66. "Connections" page 65 is a page for distributing information on passenger vehicles that allow connections as content to user terminal device 108 or 109. "Reservations" page 67 is able to accept reservations for desired passenger vehicles (passenger vehicles that allow connections). "Returns" page 66 is a page for distributing information on passenger vehicles that can be used for a return trip as content to user terminal device 108 or 109. "Reservations" page 67 is able to accept reservations for desired passenger vehicles (passenger vehicles that can be used for return trips).

"Purchase" page 7 is a page for introducing articles that passengers of passenger vehicle 101 are able to buy and for allowing passengers to purchase articles that have been introduced. In the present embodiment, "Purchase" page 7 is a page that allows selection of any of "Meals-Beverages" page 71, "Souvenirs" page 72, and

Newspaper-Magazines" page 73.

"Meals-Beverages" page 71 is a page for distributing information on meals and beverages as articles that passengers can purchase to user terminal device 108 or 109. "Souvenirs" page 72 is a page for distributing information on souvenirs, as articles that passengers can purchase, to user terminal device 108 or 109. "Newspaper-Magazines" page 73 is a page for distributing information on newspapers and magazines, as articles that passengers can purchase, to user terminal device 108 or 109.

Explanation next regards operations relating to the distribution of content. In order for a user to view moving picture (movie) content or hear music content, the user uses the web browser installed in user terminal device 108 or 109 to select "Video & Music" page 3 from Top page 2 of the web site prepared by web server 112 and then selects the movie, music, or news that he or she wishes to enjoy.

User terminal device 108 or 109 transmits the user's selection results to content server 104. Content server 104 distributes the content indicated by the selection results, that have been transmitted from user terminal device 108 or 109, to the user terminal device that transmitted the user's selection results. When the content is distributed from content server 104 to the user terminal device, the user terminal device reproduces the distributed content. If the user wishes to view or hear content that is not available in content server 104, the user can use "Request" page 35 to submit a request for content from the user terminal device to content server 104.

In this case, content server 104 receives the user's request (a desired content request signal) that has been transmitted from the user terminal device by way of antenna 106 or 107 or by cable. Content server 104 next transfers the user's request, (the desired content request signal) that has been transmitted from the user terminal device, to management center 200 installed outside the passenger vehicle by way of antenna 103 and communication infrastructure 102 that is outside passenger vehicle 101.

FIG. 3 is a block diagram for explaining the content distribution operations that are used by the management center.

In FIG. 3, management center 301 corresponds to management center 200 that is shown in FIG. 1. Management center 301 includes main server 302 as a content management unit that manages at least one content.

Passenger vehicles 303, 305, and 307 have the same configuration as passenger vehicle 101 that is shown in FIG. 1. Passenger vehicles 303 and 307 are stopped, and passenger vehicle 305 is in motion.

Communication infrastructures 304, 306, and 309 have the same composition as communication infrastructure 102 shown in FIG. 1. Communication infrastructure 304 is used at stop point A of the passenger vehicle. Communication infrastructure 306 is used when the passenger vehicle is in motion. Communication infrastructure 309 is used at stop point B of the passenger vehicle.

Edge server 308 is installed at stop point B.

Referring now to FIG. 3, explanation next regards the content distribution operations of the management center.

Each of the cars of passenger vehicle 303 that is stopped and of passenger vehicle 305 that is in motion, reports content for which there has been requests from users (desired content request signals) to management center 301 through communication infrastructure 304 or communication infrastructure 306.

Since passenger vehicle 305 is in motion, it therefore encounters difficulties in securing a stable and broad communication bandwidth when attempting radio communication with management center 301 (more specifically, with communication infrastructure 306). Passenger vehicle 305 therefore has difficulties in receiving content from main server 302 without data loss.

Thus, in the present embodiment, even though a passenger vehicle transmits a request for content (a desired content request signal) to management center 301 while the passenger vehicle is in motion, management center 301 does not perform processing for transmitting the content itself from main server 302 to the passenger vehicle.

Upon receiving a desired content request signal from passenger vehicle 305 that is in motion, management center 301 transfers the content requested by the desired content request signal from main server 302 to edge server 308 of stop point B that passenger vehicle 305 is to stop.

When passenger vehicle 305 subsequently stops at stop point B, edge server 308 uses communication infrastructure 309 for which a stable and broad communication bandwidth can be secured to transfer the content transferred from management center 301 to content server 104 in the passenger vehide. In other words, content server 104 receives the desired content only after a state, in which this desired content provided by main server 302 can be accurately received, is attained.

Content server 104 provides this data-transferred content to the user terminal device that requested the data-transferred content. Content server 104 distributes the content, that has been data-transferred, to the user terminal device by a multicast or broadcast method, and if user terminal device receives the content by a multicast or broadcast method, the distribution traffic can be effectively used because the distribution traffic does not depend on the number of distribution terminal devices.

When content server 104 receives content from management center 301, the content that can be distributed in passenger vehicle changes. As a result, content server 104 may show information that indicates the change of content that can be distributed in passenger vehicle (the addition of content and/or the updating of content). For example, content server 104 may show the information on a web site provided by web server 112. Further, content server 104 may report the information to the user terminal device of the user that has requested content. Further, content server 104 may report the information to all user terminal devices that are present in the passenger vehicle. This notification may be realized by transmitting email or instant messages that indicate the change of content to user terminal devices connected to content server 104.

The addition or updating of the content of news, for which immediacy is always sought, and the addition or amendment of the page of a web site such as is shown in FIG. 2 is preferably performed under the control of management center 301 by using a transmission path having a large communication bandwidth when the passenger vehicle is stopped at a stop point.

If the capacity of the communication bandwidth between main server 302 and communication infrastructure 309 of stop point B is sufficiently large for the communication traffic requested by main server 302, main server 302 may transfer the data (content) to content server 104 in the passenger vehicle by way of communication infrastructure 309 without passing through edge server 308.

Further, the addition of content and the updating of content to edge server 308 and the addition or amendment of pages of a web site may be performed through the operation of a stop point center (not shown in the figure) installed at stop point B.

When a large number of users request the addition or updating of content, the communication bandwidth may be inadequate even when the passenger vehicle is stopped. As a method of solving this problem, only content that has been requested by a larger number of users may be added and/or updated when the passenger vehicle is stopped.

In addition, it may include a resume function by which, when data transfer is interrupted by the start of motion of the passenger vehicle and when the content is still in the process of being updated, the data transfer can be resumed from the part at which the data transfer was halted at the next stop point.

For example, when vehicle server 100, due to the state of the transmission path, suspends the reception of desired content from edge server 308 while still receiving content, management center 301 may transmit the desired content to the edge server installed at the location at which the passenger vehicle will next make a stop, and vehicle server 100 may receive the desired content from the point at which reception was interrupted from the edge server installed at the location of the next stop.

On the other hand, when a user uses the web browser of a user terminal device to select "Facilities Guide" page 5 on the site map shown in FIG. 2, content server 104 distributes to the user terminal device any information (content) regarding the facilities in the passenger vehicle, such as information about restaurant and store operations (hours of operation, menus, etc.), congested states, the vacancy of restrooms, the location of emergency exits and the appropriate action that is to be taken in an emergency. The user terminal device displays the information that has been distributed from content server 104, whereby the user can view the information on the facilities in the passenger vehicle.

"Facilities Guide" page 5 may be set such that, when "Facilities Guide" page 5 is selected, the user can select the distribution of a live image obtained from camera 115 installed in the passenger vehicle (for example, the view from the pilot's or driver's seat of the passenger vehicle). Content server 104 may be realized so as to distribute the live image by means of camera 115 when the distribution of a live image of camera 115 has been selected.

When the user uses the web browser of the user terminal device to select "Sightseeing Guide" page 4 on the site map shown in FIG. 2, content server 104 distributes information about sightseeing points of interest at each location where the vehicle stops, as well as information about sightseeing spots that the service operators wish to promote. The user terminal device displays the information that has been distributed from content server 104. As a result, the user is able to view information on guidance to the vicinity of stop points of the passenger vehicle that the user is on, as well as guidance to sightseeing spots that service operators wish to promote.

When there is a fee for using the above-described service or a for viewing content, content server 104 must execute processing relating to the user's authentication and the settlement of charges.

The application for a content viewing service is accepted by, for example, a management center or content server 104.

If a management center approves the application, the management center can accept the application for the content viewing service at the same time as accepting the application for use of the passenger vehicle (ticket purchase).

If content server 104 approves the application, content server 104 can accept the application after the user has boarded the passenger vehicle.

If the management center accepts the application for the content viewing service, the authentication information (such as ID and password) that is necessary for the user to log on to the network in the passenger vehicle can be conveyed to the user (passenger) by a method such as having it printed on the ticket of the passenger vehicle at the time of application to use the service.

In addition, if the management center accepts the application for the content viewing service, the management center can accept the method of settling charges relating to the provided service. Regarding methods of settling charges relating to the provided service, they may be paid together with the fare for the passenger vehicle, paid by credit card, withdrawn from a designated account, or paid by cash at the time of applying for the content viewing service.

When a management center approves the application for the content viewing service, the user can apply in advance for the content that he or she wishes to view at the time of applying for the content viewing service, and can also pay for charges for the content.

On the other hand, when content server 104 accepts the application for the content viewing service, web server 112 and user authentication unit 111 of the content server 104 register user information that includes the charge payment method, and then issue the authentication information and report the authentication information to the passenger. As to the user authentication technology, a variety of techniques already exist and a detailed explanation is therefore omitted in the present embodiment.

Explanation next regards the operations relating to the method of settling charges for using the service and/or content for each user.

FIG. 4 is a block diagram for explaining the operations relating to the settlement method.

Regarding FIG. 4, management center 401 corresponds to management center 200 shown in FIG. 1. Management center 401 includes settlement information management server 402 for managing settlement information. Passenger vehicle 403 has the same composition as passenger vehicle 101 shown in FIG. 1. Content server 404 corresponds to content server 104 shown in FIG. 1. User terminal device 405 corresponds to user terminal device 108 shown in FIG. 1. Communication infrastructure 406 corresponds to communication infrastructure 102 shown in FIG. 1. Communication infrastructure 406 is used at stop points or at the final destination of passenger vehicle 403.

A request for content by means of user terminal device 405 in passenger vehicle 403 is supplied to content server 404 by way of antenna 106. Content server 404 records the content request that has been supplied as settlement information. Content server 404 adds the charges for use of content based on this settlement information.

This settlement information (the results of addition) is transmitted by content server 404 to settlement information management server 402 of management center 401 by way of communication infrastructure 406 when passenger vehicle 403 arrives at a stop point and/or the final destination. Based on this information, the service provider charges fees by means of the settlement method designated by the user at the time of applying for the content viewing service.

In the present embodiment, the communication infrastructure that transfers content requests or content when the passenger vehicle is stopped need not be a radio communication path, and may be a cable communication path.

In addition, if there is a time interval in which a broad and stable communication bandwidth can be secured, the above-described processing that is to be performed when the passenger vehicle is stopped may of course be carried out during this interval even though the passenger vehicle is not stopped but is in motion.

According to the present embodiment, content that has been requested from a terminal device in a passenger vehicle can be distributed to the terminal device. In addition, content server 104 receives desired content when content server 104 has attained a state that allows reception of the desired content provided by main server 302. As a result, communication operations that are potentially impossible, when the passenger vehicle is in motion, can be reduced.

Second Working Example

Explanation next regards the second working example of the present invention. The second working example of the present invention is a service providing system that allows reservation of desired facilities in a passenger vehicle.

The configuration of the second working example of the present invention is substantially equivalent to the first working example that is shown in FIG. 1. The site map of the web site installed in web server 112 of content server 104 in FIG. 1 is also equivalent to the example shown in FIG. 2.

Explanation next regards the operations when a user makes a reservation for a desired facility in a passenger vehicle.

When a user, a passenger of passenger vehicle 101, uses the web browser on user terminal device to select ''Vicinity Facilities" page 42 from "Sightseeing Guide" page 4 explained in the first working example on the web site shown in FIG. 2, he or she can then reserve the use of vicinity facility by means of "Reservations" page 67.

When a user, a passenger of passenger vehicle 101, uses the web browser on a user terminal device to select "Current" page 61 from ''Vacancy Guide" page 6 explained in the first working example on the web site shown in FIG. 2, he or she can then reserve a seat in the passenger vehicle that he or she has now boarded by means of "Reservations" page 67.

When a user, a passenger of passenger vehicle 101, uses the web browser on a user terminal device to select "Future" page 62 from ''Vacancy Guide" page 6 explained in the first working example on the web site shown in FIG. 2, he or she can reserve the use of a future connecting passenger vehicle and/or a return-trip passenger vehicle by means of "Reservations" page 67. "Reservations" page 67 is preferably set such that a user can designate the method of obtaining a ticket (acquisition method information) for using the reserved facilities.

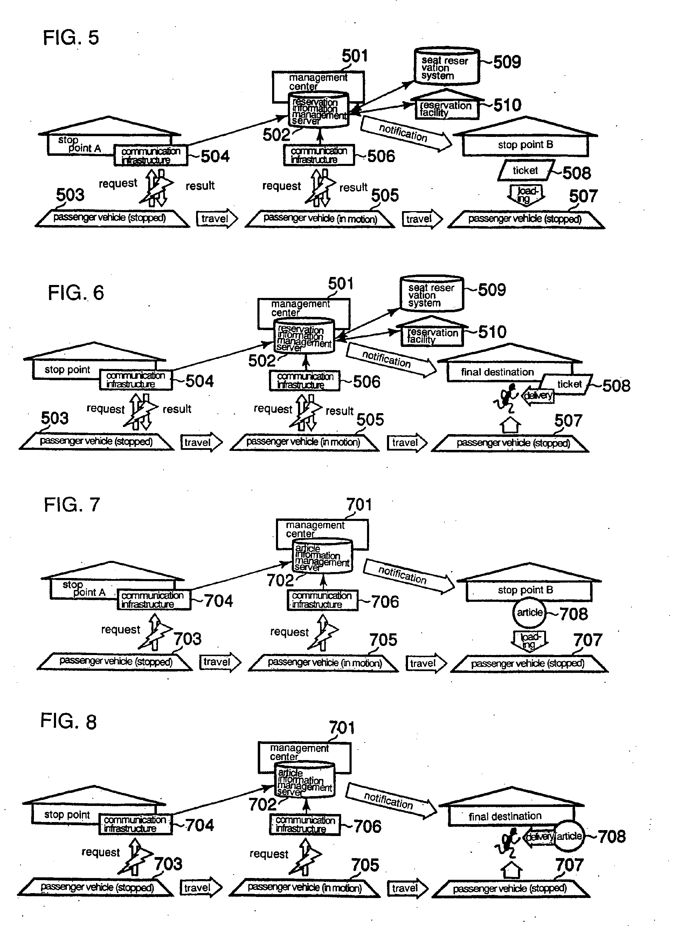

FIG. 5 is a block diagram for explaining the operations when a user designates the acquisition of a ticket at a seat of a passenger vehicle.

In FIG. 5, management center 501 corresponds to management center 200 shown in FIG. 1. Management center 501 includes reservation information management server 502 as the reservation management unit that manages reservations of at least one facility.

Reservation information management server 502 is connected by way of communication lines to: seat reservation system 509 for managing seat reservations of a passenger vehicle, and reservation facility 510 for managing the reservations of facilities in the vicinity (vicinity facilities) of a stopping point of the passenger vehicle.

Passenger vehicles 503, 505, and 507 each have the same composition as passenger vehicle 101 shown in FIG. 1. Passenger vehicles 503 and 507 are stopped. Passenger vehicle 505 is in motion.

Communication infrastructures 504 and 506 have the same composition as communication infrastructure 102 shown in FIG. 1. Communication infrastructure 504 is used at stop point A of the passenger vehicle. Communication infrastructure 506 is used when the passenger vehicle is in motion.

Ticket 508 is a ticket for using the facility reserved by using the service providing system.

If a passenger vehicle that is stopped, such as passenger vehicle 503 that carries content server 104 that accepted a user's reservation application signal that was transmitted from a user terminal device, content server 104 transmits the reservation application signal to reservation information management server 502 of management center 501 by way of communication infrastructure 504.

Reservation information management server 502 applies to seat reservation system 509 (when reserving a seat) or reservation facility 510 (when reserving a vicinity facility) for a reservation of the facility shown by the reservation application signal, and reservation information management server 502 transmits the results to content server 104 by way of communication infrastructure 504. Upon receiving these results, content server 104 reports the reservation results that have been received to the user terminal device.

If content server 104, that accepted the user's reservation application signal transmitted from the user terminal device, is carried by a passenger vehicle that is in motion, such as passenger vehicle 505, content server 104 transmits the reservation application signal to reservation information management server 502, at a time at which a communication bandwidth, which allows transmission of the reservation application signal to reservation information management server 502 by way of communication infrastructure 506, can be secured.

Reservation information management server 502 applies to seat reservation system 509 (when reserving a seat) or to reservation facility 510 (when reserving a vicinity facility) for a reservation of the facility shown by the reservation application signal. Reservation information management server 502 transmits these reservation results by way of communication infrastructure 506 to content server 104, at a time at which a communication bandwidth, which allows transmission of the reservation results to content server 104, can be secured. As a result, content server 104 receives the reservation results at a time at which a communication bandwidth, which allows reception of the reservation results, can be secured, and reports the received reservation results to the user terminal device.

When a reservation has been completed, reservation information management server 502 arranges for the provision of the facility use ticket to the user based on the method of ticket acquisition (acquisition method information) designated by the user.

In the case of FIG. 5, the user designates that the ticket is to be received at a seat in the passenger vehicle, and the user terminal device transmits to the content server a reservation application signal that includes the acquisition method information instructing that the ticket is to be received at the seat in the passenger vehicle. Content server 104 receives this reservation application signal and transmits the received reservation application signal to reservation information management server 502, and reservation information management server 502 receives the reservation application signal. Reservation information management server 502 arranges for report of the reservation result, the issuing of the ticket to the passenger vehicle at stop point B of the passenger vehicle, and arranges for an attendant of the passenger vehicle to deliver the ticket to the passenger. An attendant delivers ticket 508 that is thus placed on board at stop point B to the passenger.

If the passenger vehicle can issue a ticket for the use of the reserved facility, reservation information management server 502 reports the confirmation of the reservation to the passenger vehicle. The passenger vehicle then receives the report of confirmation of the reservation and issues a ticket. Then an attendant of the passenger vehicle can deliver the ticket to the passenger.

In the case of a reserving a vacant facility in the passenger vehicle, content server 104 may accept application for reserving the vacant facility as far as the next stop point and report the results to the user terminal device. In this case, the latest information on empty facilities of the passenger vehicle managed by reservation information management server 502 may be data-transferred to content server 104 at stop points, whereby the information on vacant facilities is updated at content server 104.

Content server 104 receives the latest information on vacant facilities of the passenger vehicle from reservation information management server 502 when content server 104 is in a state that allows reception of the latest information on vacant facilities of the passenger vehicle. Content server 104 updates the information on vacant facilities of the passenger vehicle with the received information.

FIG. 6 is a block diagram for explaining the operations when a user designates that a ticket is to be received at a specific destination. In FIG. 6, elements that are identical to elements shown in FIG. 5 are identified by the same reference numerals. The following explanation focuses on those points in the operations of the system shown in FIG. 6 that differ from operations of the system shown in FIG. 5.

The user uses a user terminal device to designate acquisition of a ticket at a destination by means of "Reservations" page 67.

Reservation information management server 502 reports the content of the confirmed reservation and requests the issue of a ticket to the destination that the user designated for acquiring the ticket. The user receives ticket 508 when the passenger vehicle arrives at the destination and the user leaves the passenger vehicle.

If there is a charge for using the service and/or for using the facility reservation service when using the above-described service, processing must be carried out based on the user's authentication and the settlement of charges. The method of applying to use the service, the method of providing the authentication information, and the method of settling charges for using the reservation facility and/or the service for each user may be realized as described in the first working example, or the user may pay these charges upon receiving the ticket.

In the present working example, it is also possible to provide the facility that a user wishes to use at a charge that is discounted from the usual charge.

For example, a discount may be received for the room charges of an accommodation facility or for the meal charges of a restaurant that has been reserved or the reserved seat on a passenger vehicle that the customer is currently using. Moreover, the reserved seat on the passenger vehicle that has already commenced travel may be sold at a price discounted from the normal price. Alternatively, a higher-class seat (for example, on a train, a "Green Seat" as opposed to an ordinary seat or an A-berth as opposed to a B-berth; on an airplane, a business-class seat as opposed to an economy-class seat; or on a ship, a first-class cabin as opposed to a second-class cabin) may be offered at a lower price than the price before the start of travel. In such cases, it can be expected that a user's customer satisfaction will be further improved and that the operators of the passenger vehicle will see an increase in the sale of seats.

Further still, operators of passenger vehicles can obtain an agent's fee for the collection of charges by acting as agent in the settlement of charges for use of a facility that a user has reserved by management center 401 shown in FIG. 4. The operators of passenger vehicles can therefore expect an increase in profit.

According to the present working example, the results of a reservation that has been requested from a terminal device in a passenger vehicle can be distributed to that terminal device. In addition, when the passenger vehicle is in motion, a reservation application signal is transmitted to reservation information management server 502, when a radio communication bandwidth , which allows transmission of the reservation application signal to reservation information management server 502, can be secured; and further, when the passenger vehicle is in motion, the reservation results that correspond to the reservation application signal are received from reservation information management server 502, when a radio communication bandwidth, which allows reception of the reservation results from reservation information management server 502, can be secured. As a result, the reservation application and reservation results can be reliably transmitted, and communication operations that are potentially futile when the passenger vehicle is in motion can be reduced.

Third Working Example

Explanation next regards the third working example of the present invention with reference to the accompanying figures. The third working example of the present invention is a service providing system that allows online shopping in a passenger vehicle.

The composition of the third working example of the present invention is substantially equivalent to the first working example shown in FIG. 1. In addition, the site map of the web site provided by web server 112 of content server 104 in FIG. 1 is the same as the example shown in FIG. 2. Explanation next regards the operations for online shopping in a passenger vehicle with reference to FIG. 1.

In FIG. 1, a user uses the web browser of user terminal device 108 or user terminal device 109 to select "Purchase" page 7 and then to select an article that he or she wishes to purchase from "Meals-Beverages" page 71, "Souvenirs" page 72, or "Newspapers-Magazines" page 73, and further, to designate an acquisition method. User terminal device 108 or user terminal device 109 transmits the article name and acquisition method that have been selected by the user to content server 104. The signal transmitted to content server 104 at this time is a request signal for a desired article.

If the article that has been requested by the desired article request signal that has been transmitted from the user terminal device is an article that is currently being handled in the passenger vehicle, and moreover, is an article that is in stock, content server 104 reports the desired article request signal that has been transmitted from the user terminal device to attendant terminal device 110 carried by an attendant and thus communicates the user's request to an attendant. The attendant then delivers the article to the user in accordance with the user's request indicated on attendant terminal device 110 carried by the attendant.

On the other hand, if the article that has been requested by the desired article request signal that has been transmitted from the user terminal device is not currently being handled in the passenger vehicle (an article that does not exist in the passenger vehicle), content server 104 transmits the request signal requesting the article that has been requested by the user to management center 200 by way of antenna 103 and communication infrastructure 102. At this time, content server 104 may display the user's request, which is based on a desired article request signal that has been received from the user terminal device, on received information display unit 105.

FIG. 7 is a block diagram for explaining the operations in a case in which an article that has been requested by a user is an article not handled in the passenger vehicle (an article does not exist in the passenger vehicle), and moreover, in which the user has designated acquisition of the article at his or her seat in the passenger vehicle.

In FIG. 7, management center 701 corresponds to management center 200 shown in FIG. 1. Management center 701 includes article information management server 702 as the article management unit for managing articles.

Passenger vehicles 703, 705, and 707 have the same composition as passenger vehicle 101 shown in FIG. 1. Passenger vehicles 703 and 707 are stopped, and passenger vehicle 705 is in motion.

Communication infrastructures 704 and 706 have the same composition as communication infrastructure 102 shown in FIG. 1. Communication infrastructure 704 is used at stop point A of the passenger vehicle, and communication infrastructure 706 is used when the passenger vehicle is in motion.

Article 708 is an article that is a product purchased through the use of the service providing system.

When the user designates acquisition of the article in the passenger vehicle, a request from a passenger of passenger vehicle 703 that is stopped at stop point A is sent by way of communication infrastructure 704 to article information management server 702 of management center 701. A request from a passenger of passenger vehicle 705 that is in motion is sent by way of communication infrastructure 706 to article information management server 702 of management center 701.

Article information management server 702 notifies stop point B, the location where the passenger vehicle will stop in the future, such that the article requested by the user is loaded on the passenger vehicle on which the user is riding when the passenger vehicle stops at stop point B. Article 708, which is loaded at stop point B, is then delivered to the user by an attendant. Because a user may request an article immediately before the passenger vehicle arrives at the stop point or may not issue a correct request from the user terminal device due to the user's error, a method, in which an attendant checks the user's request displayed on received information display unit 105 and then directs loading of the article when the passenger vehicle stops at the stop point, can be employed.

FIG. 8 is a block diagram for explaining the operations for a case in which an article that has been requested by a user is an article that is not handled in the passenger vehicle (an article does not exist in the passenger vehicle), and moreover, in which the user has designated acquisition of the article at the final destination. In FIG. 8, elements that are identical to elements shown in FIG. 7 have been given the same reference numerals.

When a user designates acquisition of an article at the final destination, the request from the passenger of passenger vehicle 703 that stops at a stop point is sent to article information management server 702 by way of communication infrastructure 704. A request from a passenger of passenger vehicle 705 that is in motion is sent to article information management server 702 by way of communication infrastructure 706.

Article information management server 702 reports instruction, that the article that the user has requested is made available, to the final destination that the user has designated for acquisition. Thus, the user receives article 708 when the passenger vehicle arrives at the final destination and the user leaves the passenger vehicle.

In the present working example, users will not lose the chance to buy such articles as local specialties that users wish to enjoy or as local products that users wish to buy as souvenirs. Since the operators of passenger vehicles can comprehend and anticipate to some extent users' needs before the articles are conveyed to the passenger vehicle, the operators of passenger vehicles can reduce the chance that articles will be left unsold.

When using the above-described services, processing based on the user's authentication and the settlement of charges must be executed if there are charges for using the service and/or charges for the product. In such a case, the method for applying to use a service, the method for providing authentication information, and the method for settling charges for articles and/or using services for each user may be equivalent to the methods of the first working example, or the user may pay when the articles are delivered. In addition, a user may also apply in advance for articles that the user wishes to purchase in a passenger vehicle when applying to use the passenger vehicle, and may pay the charges when applying to use the passenger vehicle.

In the present working example, a user of these services may be offered the articles that the user wishes to purchase at prices discounted from the original prices. In such a case, it can be expected that users will feel greater customer satisfaction, and the operators of passenger vehicles can expect an increase in sales of goods.

Still further, the operators of passenger vehicles, by acting as agents for settling charges for articles that users have purchased through management center 200, can obtain a fee for collecting charges, and can therefore expect an increase in profits.

According to the present working example, when there is a request from a user terminal device for an article that is not available in the passenger vehicle, a request signal for the article is transmitted to article information management center 702, and article information management server 702 makes arrangements such that the requested article is provided to the passenger; and it is therefore also possible for a request signal for an article that has been requested by a user to be transmitted to article information management server 702 only when the article requested by the user is not available in the passenger vehicle, whereby the transmission of unnecessary request signals to article information management server 702 can be limited. In addition, desired article request signals are reported to an attendant of the passenger vehicle, whereby the attendant can verify the validity of the desired article request signals and thus prevent the transmission of erroneous article request signals to article information management server 702 and limit the transmission of unnecessary request signals to article information management server 702.

In each of the above-described working examples, the compositions shown in the figures are only examples and do not limit the composition of the present invention.

While a preferred embodiment of the present invention has been described using specific terms, such description is for illustrative purposes only, and it is to be understood that changes and variations may be made without departing from the spirit or scope of the following claims.

## Claims

1. A service providing method for providing service in a passenger vehicle wherein a vehicle server installed in a passenger vehicle receives a desired content request signal transmitted from a terminal device of a passenger of said passenger vehicle and provides said desired content requested by said request signal to said terminal device; said method comprising:
a request signal reception step for receiving a desired content request signal transmitted from said terminal device;
a transmission step for transmitting said desired content request signal to a content management unit that is installed outside said passenger vehicle and that manages at least one content;
a content reception step for receiving the desired content when in a state that allows reception of the desired content provided by said content management unit; and
a content provision step for providing the desired content, which has been received in said content reception step, to said terminal device.

2. A service providing method in a passenger vehicle according to claim 1, wherein, in said content reception step, the desired content provided by said content management unit is received when said passenger vehicle is stopped.

3. A service providing method in a passenger vehicle according to claim 1, further comprising:
a content transmission step for transmitting said desired content, when said content management unit has received said desired content request signal, to an edge server installed in a location at which said passenger vehicle is to stop in the future;
wherein, in said content reception step, said desired content is received from said edge server.

4. A service providing method in a passenger vehicle according to claim 3, further comprising:
a content retransmission step wherein, when the reception of said desired content from said edge server is interrupted, due to a state of a transmission path in said content reception step, said content management unit transmits said desired content to an edge server installed at a location at which said passenger vehicle is to stop next;
wherein, in said content reception step, said desired content starting from the point at which reception was interrupted is received from said edge server installed at a location at which said passenger vehicle is to stop next.

5. A service providing method in a passenger vehicle according to claim 1, further comprising:
a notification step for notifying a terminal device that exists in said passenger vehicle that said desired content has been received.

6. A service providing method in a passenger vehicle according to claim 1, wherein:
in said content provision step, content is provided by a multicast method; and
in said content reception step, said desired content is received by said multicast method.

7. A service providing method in a passenger vehicle according to claim 1, wherein:
in said content provision step, content is provided by a broadcast method; and
in said content reception step, content is received by a broadcast method.

8. A service providing method in a passenger vehicle according to claim 1, wherein:
in said content provision step, said desired content, which has undergone a process for boosting resistance to changes of data, is provided.

9. A service providing method in a passenger vehicle wherein a vehicle server installed in a passenger vehicle receives a reservation application signal for a desired facility transmitted from a terminal device of a passenger of said passenger vehicle and provides reservation results that correspond to the reservation application signal to said terminal device; said method comprising:
a reservation application signal reception step for receiving a reservation application signal transmitted from said terminal device;
a reservation application signal transmission step for transmitting said reservation application signal, when said passenger vehicle is in motion, to a reservation management unit that is installed outside said passenger vehicle, and that manages reservations for at least one facility when a communication bandwidth, that allows transmission of said reservation application signal to said reservation management unit, can be secured;
a reservation result reception step when said passenger vehicle is in motion, for receiving the reservation result from said reservation management unit that corresponds to the reservation application signal when a communication bandwidth, which allows reception of said reservation result ,can be secured; and
a reservation result provision step for providing the reservation result, which has been received in said reservation result reception step, to said terminal device.

10. A service providing method in a passenger vehicle, wherein a vehicle server installed in a passenger vehicle receives a reservation application signal for a facility of said passenger vehicle, that has been transmitted from a terminal device of a passenger of said passenger vehicle, and provides reservation results that correspond to said reservation application signal to the terminal device; said method comprising:
a reservation application signal reception step for receiving a reservation application signal transmitted from said terminal device;
a step for reserving a vacant facility of said passenger vehicle that is based on both vacant facility information of the passenger vehicle managed at said vehicle server and said reservation application signal; and
a reservation result provision step for providing the reservation results to said terminal device.

11. A service providing method in a passenger vehicle according to claim 10, further comprising:
a reception step for receiving the most recent vacant facility information of said passenger vehicle from a reservation management unit that is installed outside said passenger vehicle and that manages reservations of at least one facility when in a state that allows reception; and
a step for using this information to update vacant facility information of said passenger vehicle managed at said vehicle server.

12. A service providing method in a passenger vehicle according to claim 9, wherein:
said reservation application signal, which includes acquisition method information indicating the method of acquiring a ticket for using said desired facility, is received; and
said service providing method further comprising
an arrangement step for making arrangements for implementing the acquisition indicated in said acquisition method information when a reservation that corresponds to said reservation application signal is completed.

13. A service providing method in a passenger vehicle according to claim 9, wherein the charge for using a desired facility for which a reservation is applied by said reservation application signal is a different price than the normal price.

14. A service providing method in a passenger vehicle, wherein a vehicle server installed in a passenger vehicle receives a desired article request signal transmitted from a terminal device of a passenger of said passenger vehicle and makes arrangements for providing the desired article requested by said request signal to said passenger; said service providing method comprising:
a request signal reception step for receiving a desired article request signal transmitted from said terminal device;
a transmission step when said desired article is not available in said passenger vehicle, for transmitting said desired article request signal to an article management unit that is installed outside said passenger vehicle and that manages articles; and
an arrangement step for making arrangements by said article management unit such that said desired article is provided to said passenger.

15. A service providing method in a passenger vehicle wherein a vehicle server installed in a passenger vehicle receives a desired article request signal transmitted from a terminal device of a passenger of said passenger vehicle and makes arrangements for providing the desired article requested by said request signal to said passenger; the service providing method comprising:
a request signal reception step for receiving a desired article request signal transmitted from said terminal device; and
a notification step for notifying an attendant of said passenger vehicle of said desired article request signal.

16. A service providing method in a passenger vehicle according to claim 1, further comprising:
a step for accepting an application to use a provided service wherein said acceptance of this application is simultanous with the acceptance of an application to use said passenger vehicle.

17. A service providing method in a passenger vehicle according to claim 1, further comprising:
an authentication information provision step when accepting an application to use said passenger vehicle, to provide a customer that has applied for use of the passenger vehicle with passenger authentication information that is necessary when using said service.

18. A service providing method in a passenger vehicle according to claim 1, further comprising:
a fare acceptance step for accepting charges for using said provided service at the same time as accepting the fare of said passenger vehicle.

19. A service providing method in a passenger vehicle according to claim 1, further comprising:
a settlement method acceptance step, at the time of accepting an application to use of said passenger vehicle, for accepting a method of settling charges relating to said provided service.

20. A service providing method in a passenger vehicle according to claim 1, further comprising:
a usage fee addition step for adding up fees for using said provided services.

21. A service providing method in a passenger vehicle according to claim 20, further comprising:
an addition notification step for notifying a management center installed outside said passenger vehicle of the addition results of said usage fee addition step.

22. A service providing method in a passenger vehicle according to claim 9, wherein an agent fee is obtained for collecting charges for using said provided service.

23. A service providing system that includes a vehicle server installed in a passenger vehicle and a content management unit that is provided outside said passenger vehicle and that manages at least one kind of content, said service providing system providing desired content, which has been requested by a desired content request signal, that has been transmitted from a terminal device of a passenger of said passenger vehicle to said terminal device; said vehicle server comprising:
a request signal reception unit for receiving a desired content request signal transmitted from said terminal device;
a transmission unit for transmitting said desired content request signal to said content management unit;
a content reception unit for receiving the desired content when in a state that allows reception of said desired content provided by said content management unit; and
a content provision unit for providing desired content, which has been received by said content reception unit, to said terminal device.

24. A service providing system according to claim 23, wherein said vehicle server provides said desired content to said terminal device by means of a multicast method.

25. A service providing system according to claim 23, wherein said vehicle server provides said desired content to said terminal device by means of a broadcast method.

26. A service providing system according to claim 23, wherein said vehicle server, when providing said desired content to said terminal device, implements processing said content in order to boost resistance to changes of data.

27. A service providing system according to claim 23, wherein said content reception unit receives said desired content provided by said content management unit when said passenger vehicle is stopped.

28. A service providing system according to claim 23, wherein:
said content management unit includes a content transmission unit for, upon receiving said desired content request signal, transmitting said desired content to an edge server installed at a location at which said passenger vehicle is to stop in the future; and
said content reception unit receives said desired content from said edge server.

29. A service providing system according to claim 23, wherein said vehicle server further comprises a notification unit for notifying a terminal device, that exists in said passenger vehicle, that said desired content has been received.

30. A service providing system that includes a vehicle server installed in a passenger vehicle and a reservation management unit that is installed outside the passenger vehicle and that manages reservations of at least one facility, said service providing system providing reservation results, which correspond to a reservation application signal for a desired facility that has been transmitted from a terminal device of a passenger of said passenger vehicle, to said terminal device; said vehicle server comprising:
a reservation application signal reception unit for receiving a reservation application signal transmitted from said terminal device;
a reservation application signal transmission unit for transmitting said reservation application signal when said passenger vehicle is in motion, to said reservation management unit, when a communication bandwidth that allows transmission of said reservation application signal to said reservation management unit, can be secured;
a reservation result reception unit for receiving reservation results when said passenger vehicle is in motion, that correspond to a reservation application signal from said reservation management unit when a communication bandwidth, that allows reception of the reservation results, can be secured; and
a reservation result provision unit for providing reservation results, which have been received by said reservation result reception unit, to said terminal device.

31. A service providing system including a vehicle server installed in a passenger vehicle, wherein reservation results, that correspond to a reservation application signal for a desired facility in said passenger vehicle that has been transmitted from a terminal device of a passenger of said passenger vehicle, are provided to said terminal device; said vehicle server comprising:
a reservation application signal reception unit for receiving a reservation application signal that has been transmitted from said terminal device; and
a reservation result provision unit for providing reservation results that correspond to a reservation application signal to said terminal device based on vacant facility information of said passenger vehicle that is managed at said vehicle server.

32. A service providing system according to claim 31, further comprising:
a reservation management unit installed outside said passenger vehicle for managing reservations of at least one facility;
wherein said vehicle server further comprises:
a reservation information reception unit for receiving from said reservation management unit the most recent vacant facility information of said passenger vehicle, that is managed by said reservation management unit, when a communication bandwidth which allows reception of the vacant facility information signal, can be secured; and
a reservation information update unit for using reservation information that has been received by said reservation information reception unit to update vacant facility information of said passenger vehicle that is managed by said vehicle server.

33. A service providing system that includes a vehicle server installed in a passenger vehicle and an article management unit installed outside said passenger vehicle for managing articles, said service providing system arranging for a desired article, which has been requested by a desired article request signal that has been transmitted from a terminal device of a passenger of said passenger vehicle, to be provided to said passenger;
said vehicle server comprising:
a request signal reception unit for receiving a desired article request signal that has been transmitted from said terminal device; and
a transmission unit for transmitting said desired article request signal to said article management unit when said desired article is not available in said passenger vehicle;
wherein said article management unit arranges for said desired article to be provided to said passenger.

34. A service providing system that includes a vehicle server installed in a passenger vehicle and an article management unit installed outside said passenger vehicle for managing articles, said service providing system arranging for a desired article, which has been requested by a desired article request signal that has been transmitted from a terminal device of a passenger of said passenger vehicle, to be provided to said passenger; said vehicle server comprising:
a request signal reception unit for receiving a desired article request signal that has been transmitted from said terminal device; and
a notification unit for notifying an attendant of said passenger vehicle of said desired article request signal.
